# EUROPEAN PATENT APPLICATION

(11) **EP 1 677 502 A1**
(43) Date of publication of application: **05.07.2006**
(21) Application number: 04078540.4
(22) Date of filing: 28.12.2004
(51) Int. Cl.: H04M 3/42, H04M 7/00

(54) **Method for providing presence information in a telecom network**

(71) Applicant: Koninklijke KPN N.V., 2516 CK The Hague (NL)
(72) Inventor: Koert, Pieter, 2518 HR The Hague (NL)
(74) Representative: Wuyts, Koenraad Maria

(57) **Abstract**

A method is disclosed for determining if the real-time status of an end-user line (4) is busy or idle. The end-user line (4), via which POTS or ISDN services may be provided, connects an end-user device (2) and an exchange (7) that is comprised by a telecom network (1). For determining the real-time status of an end-user line (4) a presence function (5) is used that comprises a process that makes use of the Completion of Calls to Busy Subscriber (CCBS) supplementary service. Because use is made of the CCBS supplementary service, the presence function (5) is able to act like an originating local exchange. In order to determine the real-time status of an end-user line (4), the presence function (5) communicates with the exchange (7), whereby the exchange (7) acts like a terminating local exchange according to the procedures of the CCBS supplementary service. The real-time status of an end-user line (4) is then determined using the real-time status monitoring capability comprised the exchange (7), which status monitoring capability is part of the CCBS supplementary service.

## Description

### FIELD OF THE INVENTION

The present invention relates to a method for providing presence information in a telecom network.

### BACKGROUND OF THE INVENTION

Voice and data communication services often make use of presence information in telecom and computer networks. Such services may offer e.g. a calling end-user extra context information whether a called end-user is accessible by phone, and if not, for what reason and by which alternative means (voicemail, email) the called end-user can be contacted instead. In addition, end-users may be offered via a call manager service the ability to personalize their accessibility dependent on e.g. calendar information. The concept of presence has been used in several application areas, for instance in Instant Messaging. Starting from a simple notion of online/offline status, it has been expanded to include other context information around the status such as disposition (out to lunch, away from the computer, etc.) and activity status (on the phone, idle, etc.). For such services and applications there is value in knowing the real-time status of an end-user in order to increase the accessibility of that end-user and to provide the end-user greater flexibility and control in managing their communications. As a result voice and data communication services may be offered between end-users in the most convenient manner.

In known applications such as Instant Messaging such presence information is in general determined based on the real-time status of an end-user device or connection. This may be accomplished either as part of status information registered at the centralized network control, or status update information actively sent by the end-user device or by polling the status of the end-user device or connection at regular intervals without any notice to the end-user. As part of Instant Messaging applications presence information is typically used to show the online/offline status of the end-user device or connection of the persons on a contact list and is used to determine by what medium they can be reached (e.g. via Internet or an enterprise communication network).

Potentially this presence capability can also be extended to mobile users because the databases in a mobile network have knowledge of the activity status (reachable, not reachable or busy) of their mobile end-user devices. In addition, the Open Service Access Mobility Service Capability Feature (OSA Mobility SCF, see cited documents [2], [3]) standard specifies a possible method for the retrieval of presence information in mobile networks. The OSA standards are specified in order to transfer mobile network specific control information in a generalised format to non-mobile specific applications like services offered via Internet. The OSA Mobility SCF standard deals among others with the retrieval of status information (busy/idle), location information (longitude/latitude) and altitude information of end-user devices in mobile networks.

However, telecom networks that provide Plain Old Telephony Service (POTS) and/or Integrated Services Digital Network (ISDN) services do often not comprise a capability to determine real-time the status of an end-user device (busy/idle) or the status of an end-user line (busy/idle). In such telecom networks, the end-user line (which is also called a subscriber's line) connects the end-user device (e.g. a telephone set) to an exchange that is comprised by the telecom network. According to ITU-T Q.9 (see cited documents [1]), a subscriber's line is a telephone line connecting the subscriber's equipment to the exchange, typically fixed twisted copper wires. An end-user device that is connected to a telecom network is a passive element with regard to the generation of status information. A disadvantage of this is that real-time status information regarding the end-user line and/or end-user device is not available.

In known telecom networks, if one would like to know the real-time status of an end-user line, one should set up a call to that end-user line. If the end-user is on the phone, this will be noticeable by the return of a busy indication. However a disadvantage is that, if the end-user is not on the phone, the end-user will receive alerting indications or ringing tone and may answer the call and will thus be aware of the fact that another user is attempting to recover the real-time status of this end-user line.

It may also be possible that a polling mechanism based on sending call attempts is used to determine the real-time status of the end-user line. However, this would also create an undesirable situation because receiving alerting indications or ringing tone would hinder end-users. It is a disadvantage of the prior art that such situations cannot be avoided with the existing basic call procedures in telecom networks without requiring special features regarding end-user devices, or without other complex adaptations of the telecom network.

### AIM OF THE INVENTION

It is an object of the invention to eliminate the drawbacks of the prior art and to provide a method for the real-time provisioning of status information regarding an end-user line comprised by a telecom network.

### SUMMARY OF THE INVENTION

In accordance with this invention, a method is disclosed for:
determining if the real-time status of an end-user line is busy or idle, the end-user line connecting an end-user device and an exchange that is comprised by a telecom network that provides services to an end-user and that comprises Signalling System No.7 (SS7) functionality, whereby a presence function is used and whereby the presence function comprises a process that makes use of the Completion of Calls to Busy Subscriber (CCBS) supplementary service that is comprised by the SS7 functionality.

In a first aspect of the invention a presence function is disclosed, which is e.g. comprised by a computer program in a computer system, and that can be interconnected via SS7 signalling links to a telecom network. This presence function is interconnected to the SS7 signalling part functionality of this network and may offer any type of interface to a service application requesting for status information. The presence function can make use of the standard Signalling System No.7 (SS7) capabilities in a telecom network supporting the CCBS supplementary service. These SS7 network capabilities for this CCBS supplementary service are standardized by ITU-T and ETSI. The SS7 functionality in a telecom network comprises data interfaces between the exchanges in a telecom network for sending information in SS7 messages to control calls (e.g. to set up and clear calls) and associated services. The CCBS supplementary service offers end-users the possibility to receive an automatic call-back when the called end-user becomes free again after the initial call set-up failed due to a busy condition.

A purpose of the present invention is to provide a relatively simple method for real-time determining the status (idle/busy) of an end-user line in a telecom network.

A telecom network that comprises fixed lines and provides POTS and/or ISDN services including the Completion of Calls to Busy Subscriber (CCBS) supplementary service does generally not comprise a presence capability. As a consequence, real-time status information (i.e. the line or device of an end-user is busy or idle) is not commonly available in such telecom networks

An advantage of making use of a presence function according to this invention is that real-time determining the status (idle/busy) of an end-user line or an end-user device in a telecom network can be achieved in a relatively simple way. No modifications in the telecom network or special equipment at the end-user location are required.

Another aspect of the present invention is that the presence function can behave itself as an originating local exchange according to the standard CCBS procedures. The presence function may interact with the service application, although the presence function may also be used without a service application. Further, the presence function may also interact with an exchange to which the end-user line is connected whose real-time status is to be determined. During the process of determining the real-time status of an end-user line, the exchange behaves itself as a terminating local exchange according to the standard CCBS procedures. Also during the process of determining the real-time status, CCBS related information is exchanged between the presence function and the exchange. This CCBS related information is comprised by SS7 signalling messages.

The presence function can, amongst others, be used in the context of an interactive status reporting mechanism in accordance with the UserStatus API as specified in the OSA Mobility SCF standard (see cited documents [4]). The presence function may also be used in the context of a triggered status reporting mechanism in accordance with the UserStatus API as specified in the OSA Mobility SCF standard.

Another possibility is to use a presence function in the context of a multiple network domain, whereby the multiple network domain comprises a telecom network that provides POTS and/or ISDN services and also one or more other types of networks. In such a context, the service application is able to interact with the other types of networks in order to retrieve real-time status information. With the presence function according to this invention the service application is also able to interact with the telecom network to retrieve real-time status information.

### BRIEF DESCRIPTION OF THE DRAWING FIGURES

The foregoing aspects and many of the attendant advantages of this invention will become better understood by reference to the following detailed description, when taken in conjunction with the accompanying drawing, wherein:
In FIG. **1** a telecom network that provides POTS and/or ISDN services is depicted.
FIG. **2** shows a telecom network that also comprises a presence function.
FIG. **3** depicts a possible realization of the presence function and its interconnection with the service application and the telecom network.
FIG. **4** describes, in case of an interactive status reporting mechanism, the interaction between the service application, the presence function and the exchange in case the real-time status of the end-user line is busy.
FIG. **5** describes, in case of an interactive status reporting mechanism, the interaction between the service application, the presence function and the exchange in case the real-time status of the end-user line is idle.
FIG. **6** describes, in case of an interactive status reporting mechanism, the interaction between the service application, the presence function and the exchange in case the real-time status of the end-user line is not known.
FIG. **7** describes, in case of a triggered status reporting mechanism, the interaction between the service application, the presence function and the exchange in case the real-time status of the end-user line is busy.
FIG. **8** describes, in case of a triggered status reporting mechanism, the interaction between the service application, the presence function and the exchange in case the real-time status of the end-user line is idle.
FIG. **9** describes, in case of a triggered status reporting mechanism, the interaction between the service application, the presence function and the exchange in case the real-time status of the end-user line is not known.
In FIG. **10** describes the existing limitation of presence based service applications in a more comprehensive network environment.
In FIG. **11** an embodiment of the present invention is depicted as part of a more comprehensive network environment.
In FIG. **12** a diagram is depicted that describes the interaction between different entities according to the embodiment of the present invention shown in FIG. **11**

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing form the true spirit of the invention, the scope of the invention being limited only by the appended claims as finally granted.

A purpose of the present invention is to provide a method for determining the real-time status of an end-user line comprised by a telecom network. This real-time status may have different possible values such as idle and busy, although it also may be possible that there are more possible values for the real-time status. The value busy, for instance, may indicate that the end-user line is in use at a certain instance of time. The real-time status is not restricted to real real-time situations. For instance, there can be a delay between the moment that for the real-time status is requested (e.g. by an application) and the moment that it is determined (according to the method of the present invention). There can also be a delay between the moment that the real-time status is determined and the moment that it is presented to e.g. an application or a human being. In cases where the delay is relatively large, one could also speak of the status of the end-user line instead of the real-time status of the end-user line.

If an end-user line is used to provide POTS services, there is in general is a direct relationship between the real-time status of the end-user line and whether an end-user is on the phone or not on the phone. This is because in such a situation only one call can be handled simultaneously over the end-user line.

If and end-user line is used to provide ISDN services, there is a somewhat different situation. This is because in this situation more than one call can be handled over one end-user line (i.e. one call per ISDN B-channel). As a consequence, the real-time status of an end-user line being busy normally indicates that there is no free ISDN B-channel available in that end-user line. In general, there is a relationship between the real-time status of an end-user line and whether an end-user is on the phone or not on the phone.

In the further description of this invention no distinction is made between the provisioning of POTS services and ISDN services over an end-user line, so that the method according to this invention can be applied in both cases.

According to the present invention, the standard Signalling System No.7 (SS7) capabilities in a telecom network supporting the CCBS supplementary service are used for determining the real-time status of an end-user line or an end-user device. The SS7 network capabilities for the CCBS supplementary service are standardized by ITU-T and ETSI. The SS7 functionality in a telecom network comprises data interfaces between the exchanges in a telecom network for sending information in SS7 messages to control calls (e.g. to set up and clear calls) and associated services. The CCBS supplementary service offers end-users the possibility to receive an automatic call-back when the called end-user becomes free again after the initial call set-up failed due to a busy condition.

In another aspect of the invention a presence function is used that is connected to a telecom network. This presence function is interconnected to the SS7 signalling part functionality of this network and may offer any type of interface to a service application requesting for real-time status information.

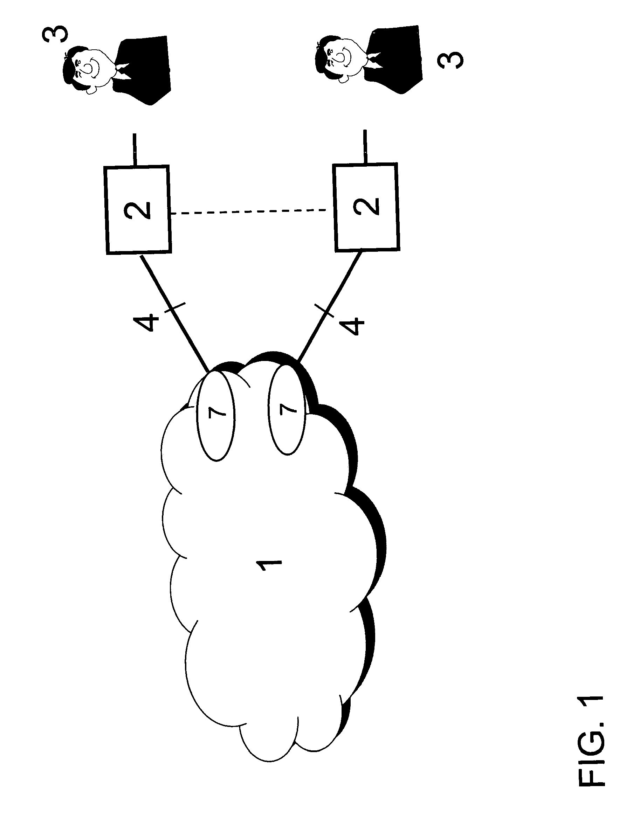

FIG. 1 shows a conceptual picture of a telecom network (1). The telecom network (1) comprises fixed lines and offers POTS and/or ISDN services to an end-user (3) including the CCBS supplementary service. The end-user (3) uses the services that are provided by the telecom network (1) via an end-user device (2). The end-user device (2) is connected to the telecom network (1) via an end-user connection (4). The end-user line (4) is terminated at an exchange (7) that is comprised by the telecom network (1). The end-user line (4) is often called a subscriber's line; the end-user (3) is in this context often called a subscriber. According to ITU-T Q.9, a subscriber's line is a telephone line connecting the subscriber's equipment to the exchange, typically fixed twisted copper wires.

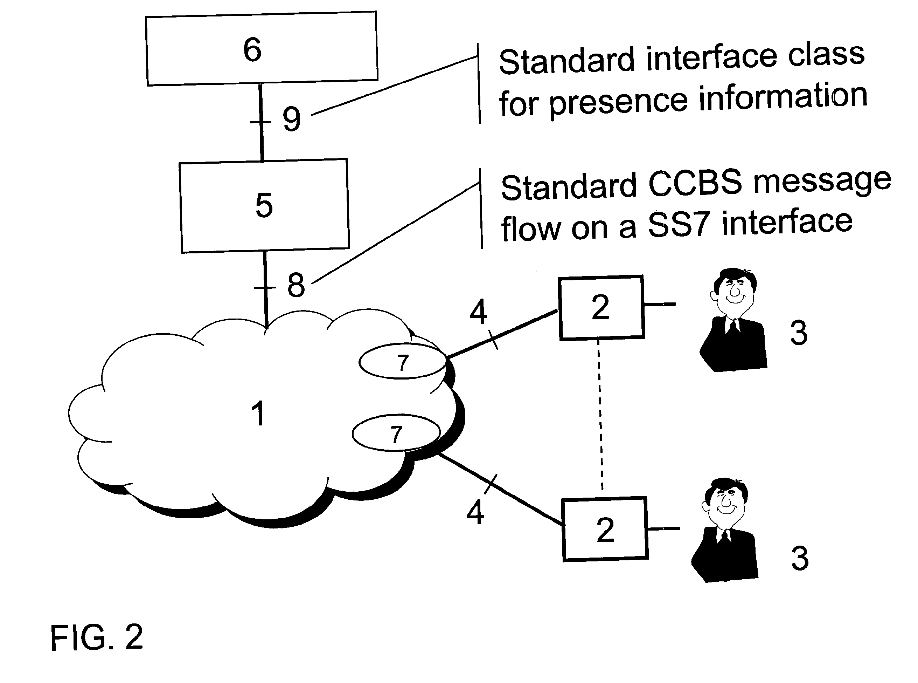

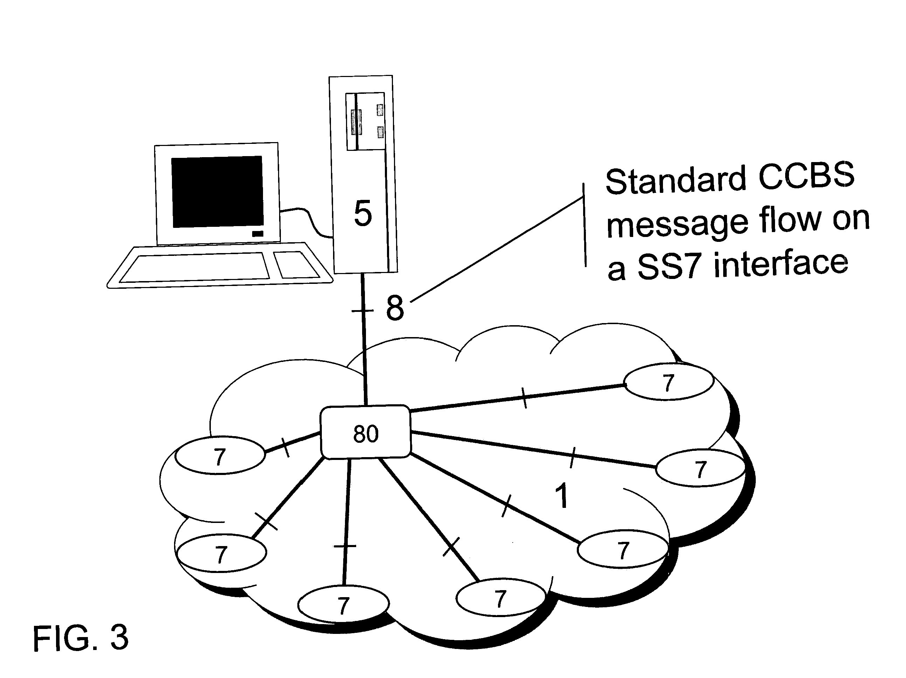

In FIG. 2 a conceptual picture is depicted of a telecom network (1) to which a presence function (5) is connected. The presence function (5) may be comprised by e.g. a computer program in a computer system. The presence function (5) is interconnected to the telecom network (1) via a first interface (8), whereby the first interface (8) comprises the standard CCBS message flow in SS7. In this regard the presence function (5) acts like a SS7 signalling instance and, in respect of the CCBS interaction with the exchange (7), the presence function (5) will behave itself as an originating local exchange according to the standard CCBS procedures (for a detailed explanation is referred to FIG. 3). An advantage of this is that since the presence function (5) will act according the standard SS7 and CCBS procedures, no modifications in the telecom network (1) or in the exchange (7) need to be made. The presence function (5) can be used by a service application (6) requesting for status information. The service application (6) can for instance be an Instant Messaging server or more generally, a call manager service application. The presence function (5) is interconnected via a second interface (9) to the service application (6), whereby the second interface (9) comprises a standard interface class such as but not limited to the UserStatus API as specified as part of the OSA Mobility SCF.

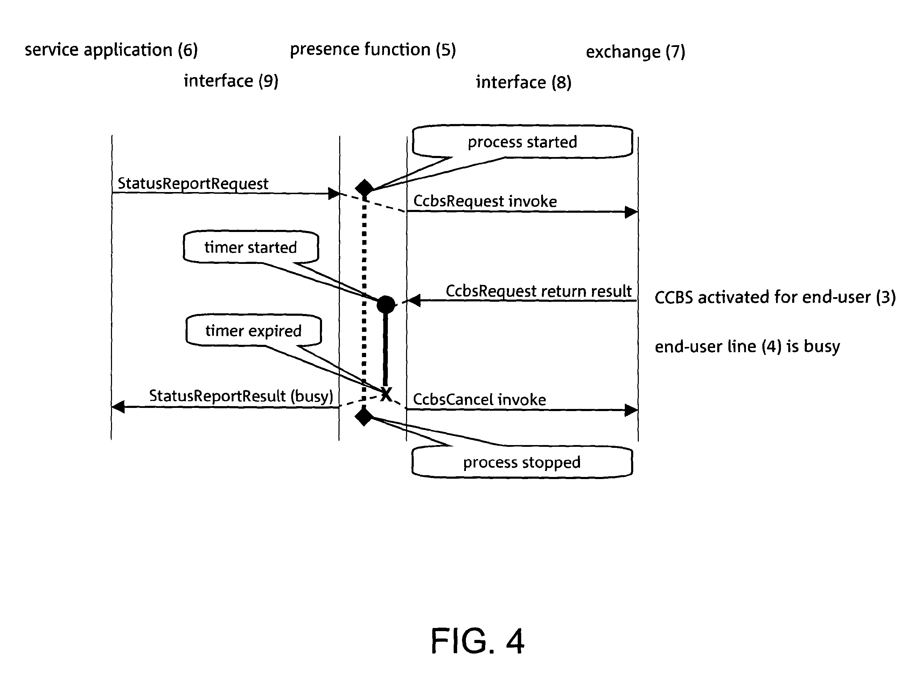

FIG. 3 depicts a possible technical realization of the presence function (5) and its interconnection with the telecom network (1) via the first interface (8). The presence function (5) may comprise a process that is implemented as a computer program residing at a computer based system. This process comprises procedures that relate to the generation of messages to be sent to the service application (6) or the exchange (7), and to the processing of messages to be received from the service application (6) or the exchange (7). The process comprised by the presence function (5) should then be capable of interrelating the SS7 messages sent and received via the first interface (8) with the messages sent and received via the second interface (9). The process may also comprise other kind of procedures, such as procedures whereby information is used that is available from a database (e.g. end-user related information). The process may also comprise procedures for the usage of one or more timers. Further, the process may comprise procedures that enable the presence function to act as if it was an originating local exchange. The process comprised by the presence function (5) may have many different embodiments. It is only required that this process is able to interoperate with the first interface (8), if available, that conforms to the standard CCBS message flow in SS7 and with the second interface (9) that conforms to a standard interface class such as but not limited to the UserStatus API as part of the OSA Mobility SCF (as elucidated in FIG. **4** through FIG. **9).**

The presence function (5) may also comprise a database, and additionally or alternatively, a standard SS7 protocol stack. This SS7 protocol stack enables the presence function (5) to interact via the first interface (8) with a SS7 signalling function (80) that is comprised by the telecom network (1). The SS7 signalling function (80) is usually an existing function in telecom networks, and could be comprised by a dedicated physical entity in the SS7 data network. Between each exchange (7) and the signalling function (80), there will be then a SS7 interface. It may also be possible that the signalling function (80) is integrated in one or more exchanges comprised by the telecom network (1).

Via the signalling function (80) the presence function (5) can send and receive SS7 signalling messages to and from the exchange (7). The presence function (5) may be implemented as integral part of an exchange or other system that is already interconnected to the SS7 data network in the telecom network (1). In such an alternative scenario the first interface (8) would then be invisible and possibly implemented in another way. The telecom network (1) may also comprise other entities that are not depicted in FIG. 3 such as intermediate exchanges.

As stated earlier, the process comprised by the presence function (5) may also comprise elementary procedures for an originating local exchange in accordance with the CCBS standard. These procedures enable the presence function (5) to simulate the CCBS interaction via SS7 message with the exchange (7) as if a calling end-user interconnected to another exchange in the telecom network (1) would have initiated the execution of the CCBS supplementary service. Thus, instead of a calling end-user it is the presence function (5) that will be informed concerning the real-time status of an end-user line (4). In the case of such a simulation by the presence function (5), the exchange (7) that serves the end-user (3) that corresponds to the end-user line (4) of which the real-time status is to be determined will perform the standard procedures for a terminating local exchange in accordance with the CCBS standard.

FIG. **4** describes, in case of an interactive status reporting mechanism (as specified in the OSA Mobility SCF standard), the interaction between the service application (6), the presence function (5) and the telecom network (1) if the real-time status of the end-user line (4) connected to the exchange (7) is busy. This interaction is performed according to a procedure that is comprised by the process of the presence function (5). On receipt of a StatusReportRequest (see explanatory list, f)) with a request of the service application (6) for the status of the end-user line (4), the presence function (5) will start a process that manages, amongst others, the interaction between the message flow via the first interface (8) to the telecom network (1) and the message flow via the second interface (9) to the service application (6). This process will initiate a CcbsRequest invoke component (see explanatory list, a)) to the telecom network (1) which is comprised in a SS7 signalling message.

As part of the standard SS7 signalling message routing in the telecom network (1), the CcbsRequest invoke component will be sent to the exchange (7) serving the end-user (3). The exchange (7) will behave itself as the terminating local exchange according to the standard CCBS procedures. An advantage of this is that the exchange (7) will start, upon receiving the CcbsRequest invoke component, monitoring the status of the end-user line (4) in accordance with the standard CCBS procedures.

As a result of the busy status of the end-user line (4), the exchange (7) will generate a CcbsRequest return result component (see explanatory list, b)) which is comprised in a SS7 message. With the standard SS7 signalling message routing in the telecom network (1), this SS7 message will be sent via the interface (8) to the presence function (5). At this stage of the interaction the CcbsRequest return result only informs the presence function (5) that the exchange (7) has initiated a CCBS monitoring process to determine the status of the end-user line (4). The process comprised by the presence function (5) shall then start a timer to await the possible receipt of a RemoteUserFree invoke component (see explanatory list, d)) from the exchange (7).

If within a specific time interval, indicated by the expiry of the timer as part of the process in the presence function (5), no RemoteUserFree invoke component in a SS7 message is received from the exchange (7), the presence function (5) shall send a StatusReportResult (see explanatory list, g)) to the service application (6) with an indication that the real-time status of the end-user line (4) is busy. The presence function (5) may also send a CcbsCancel invoke component (see explanatory list, e)) in a SS7 signalling message to the exchange (7) via the interface (8) at the telecom network (1). On receipt of the CcbsCancel invoke component the exchange (7) will stop the CCBS monitoring process in the exchange (7) will be stopped. An advantage of sending this CcbsCancel invoke component is that a possible recall requires no specific CCBS coding as part of a subsequent call set-up message. Subsequently, the process in the presence function (5) shall be stopped.

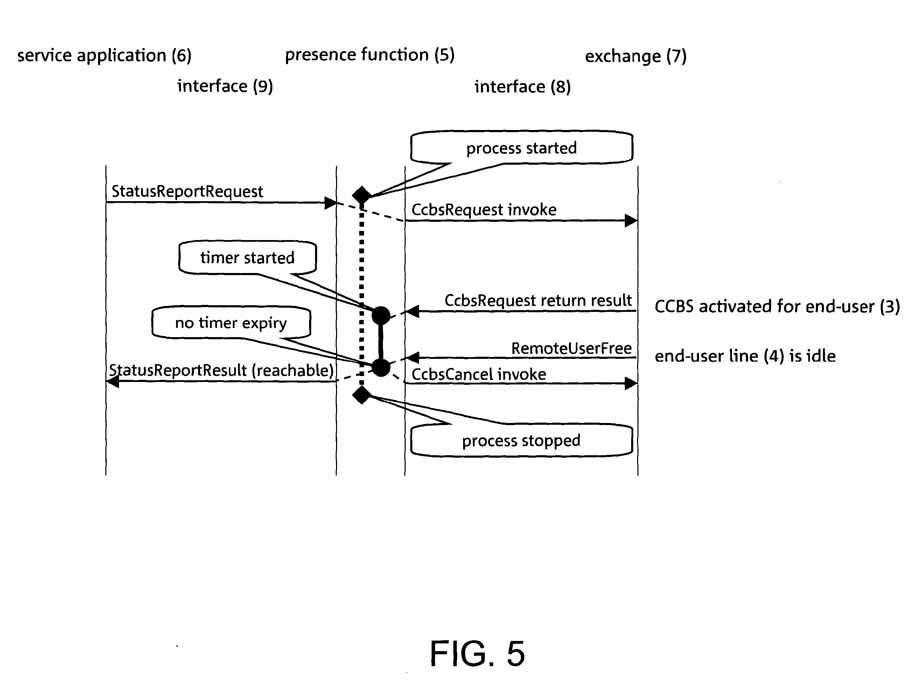

FIG. 5 describes, in case of an interactive status reporting mechanism (as specified in the OSA Mobility SCF standard), the interaction between the service application (6), the presence function (5) and the telecom network (1) if the real-time status of the end-user line (4) is idle. This interaction is identical to the interaction depicted in FIG. 4until and including the start of a timer to await the possible receipt of a RemoteUserFree invoke component from the exchange (7). On receipt of the RemoteUserFree invoke component from the exchange (7) in a SS7 message, the presence function (5) shall send a StatusReportResult to the service application (6) with an indication that the real-time status of the end-user (3) is idle (reachable) and also a CcbsCancel invoke component within a SS7 signalling message to the exchange (7).Subsequently, the process in the presence function (5) shall be stopped.

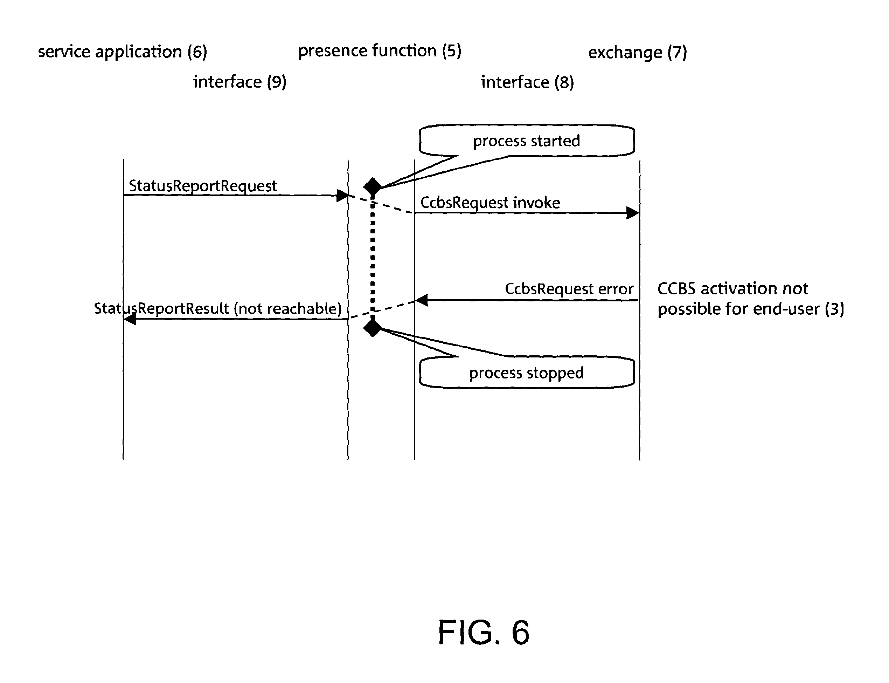

FIG. **6** describes, in case of an interactive status reporting mechanism (as specified in the OSA Mobility SCF standard), the interaction between the service application (6), the presence function (5) and the telecom network (1) if the real-time status of the end-user line (4) is not known. This refers to situations when the exchange (7) cannot activate monitoring the real-time status of the end-user line (4). This applies e.g. if there are already the maximum number of CCBS requests queued regarding the end-user line (4), if no compatible ISDN terminal can be found or if other exceptional procedures apply as specified as part of the standard CCBS procedures. On receipt of the CcbsRequest return error component (see explanatory list, c)) in a SS7 message by the presence function (5), the presence function (5) shall send a StatusReportResuit to the service application (6) with an indication that the real-time status of the end-user line (4) is not known. Subsequently, the process in the presence function (5) shall be stopped.

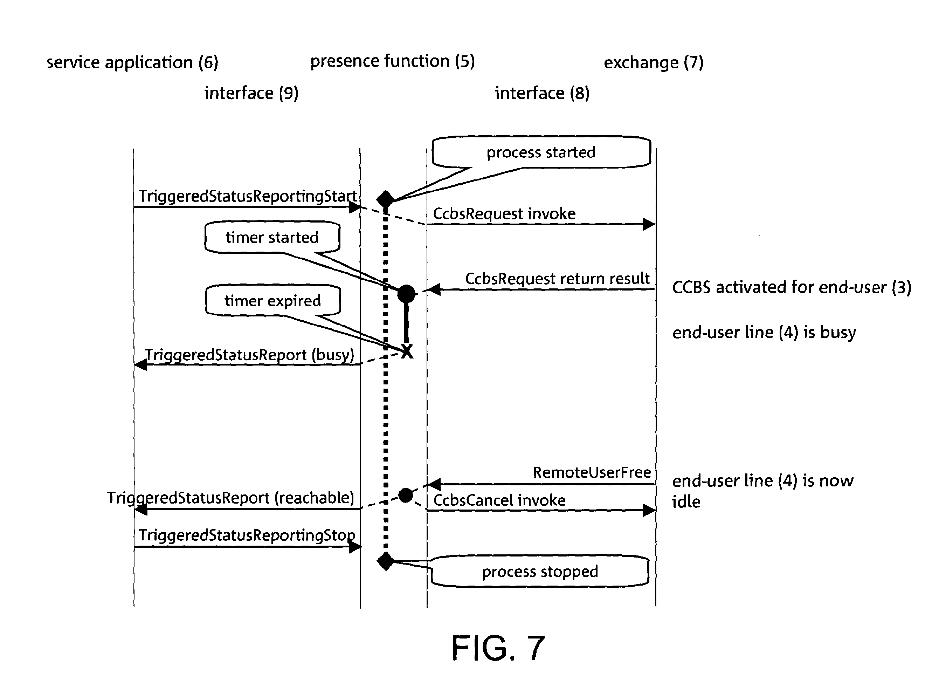

The foregoing set of diagrams depicted in FIG. **4,** FIG. **5** and FIG. **6**describe a possible operation of the presence function (5) in relation to the second interface (9) in the case that the interactive status reporting mechanism in accordance with the UserStatus API as specified in the OSA Mobility SCF standard applies. This interactive reporting mechanism is a method whereby, in general, a service application can request a network for the current status of an end-user without expecting follow-up actions to be performed by the network. The following set diagrams FIG. 7, FIG. **8** and FIG. **9** describe a possible operation of the presence function (5) in relation to the interface (9) in the case that the triggered status reporting mechanism in accordance with the UserStatus API as specified in the OSA Mobility SCF standard applies. The triggered status reporting mechanism is a method whereby, in general, a service application can request a network for the notification of changes of the real-time status of an end-user line (4). This requires a continuing monitoring process to be performed by the network until a service application abolishes this request.

FIG. 7 describes in a similar way as in FIG. **4** the interaction between the service application (6), the presence function (5) and the telecom network (1) if the real-time status of the end-user line (4) is busy in case of the triggered status reporting mechanism (as specified in the OSA Mobility SCF standard). In this situation on receipt of a TriggeredStatusReportingStart (see explanatory list, h)) from the service application (6), the process comprised by the presence function (5) shall continue on timer expiry and will not send a CcbsCancel invoke component in a SS7 message to the exchange (7) via the interface (8) at the telecom network (1). As a result the CCBS monitoring process in the exchange (7) will continue until the real-time status of the end-user line (4) becomes idle. As is depicted in FIG. 7, the exchange (7) will then send a RemoteUserFree invoke component to the presence function (5) that in turn will notify the idle status of the end-user line (4) via the interface (9) to the service application (6) in a TriggeredStatusReport (see explanatory list, j)). It is assumed, as depicted in FIG. **7**, that because of the idle status of the end-user line (4), the service application (6) will abolish the triggered status reporting request by sending of a TriggeredStatusReportingStop (see explanatory list, i)) via the interface (9) to the presence function (5).

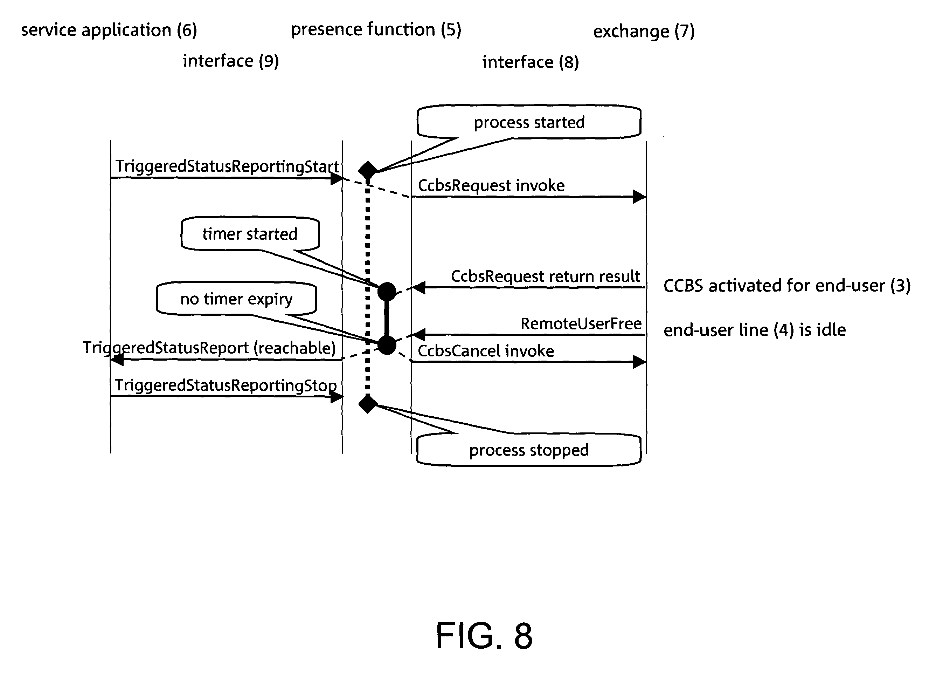

FIG. **8** describes in a similar way as FIG. **5**the interaction between the service application (6), the presence function (5) and the telecom network (1) if the real-time status of the end-user line (4) is idle in case of the triggered status reporting mechanism (as specified in the OSA Mobility SCF standard). The only change is the ending of the process in the presence function (5) whereby it is assumed, as is depicted in FIG. **8,** that because of the idle status of the end-user line (4), the service application (6) will abolish the triggered status reporting request via the interface (9) to the presence function (5).

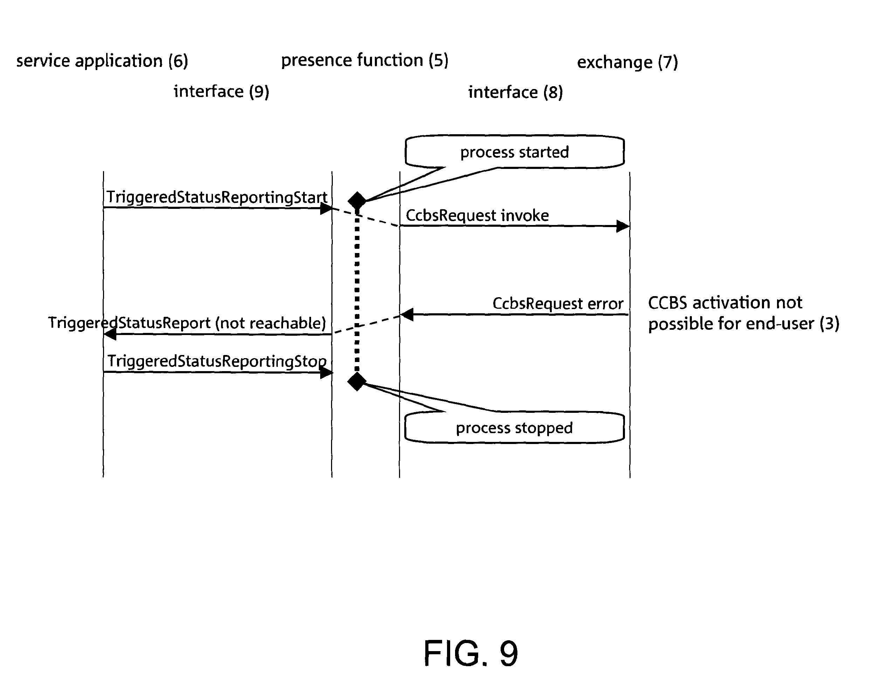

FIG. **9** describes in a similar way as FIG. **6** the interaction between the service application (6), the presence function (5) and the telecom network (1) if the real-time status of the end-user line (4) is not known in case of the triggered status reporting mechanism (as specified in the OSA Mobility SCF standard). The only change is the ending of the process in the presence function (5) whereby it is assumed, as depicted in FIG. **9,** that because of the fact that the real-time status of the end-user line (4) is not known, the service application (6) will abolish the triggered status reporting request via the interface (9) to the presence function (5).

An advantage of the present invention is that no modifications in the telecom network (1) or special features regarding an end-user device (2) are needed. This is because use is made of the existing standard SS7 signalling capabilities for the support of the CCBS supplementary service. In accordance to this invention it only requires to interconnect the presence function (5) via SS7 links to the telecom network (1). Hereby the presence function (5) on request retrieves the real-time status of an end-user line (4) comprised by the telecom network (1) in the way described before.

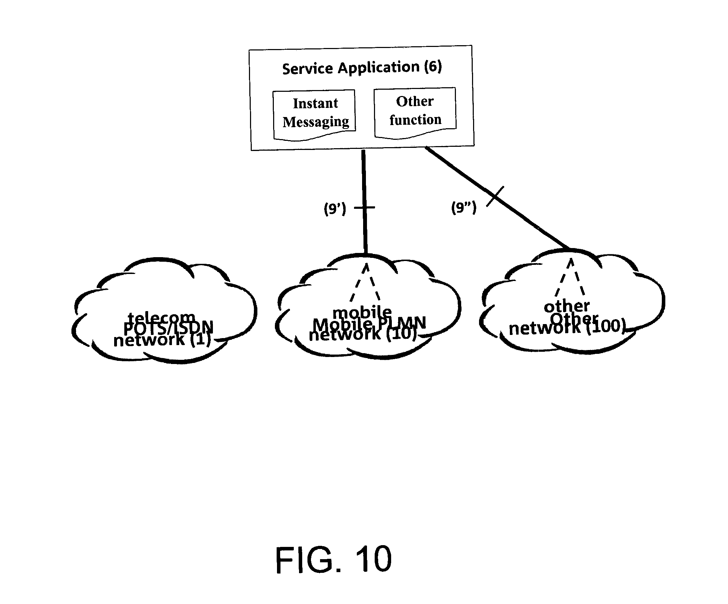

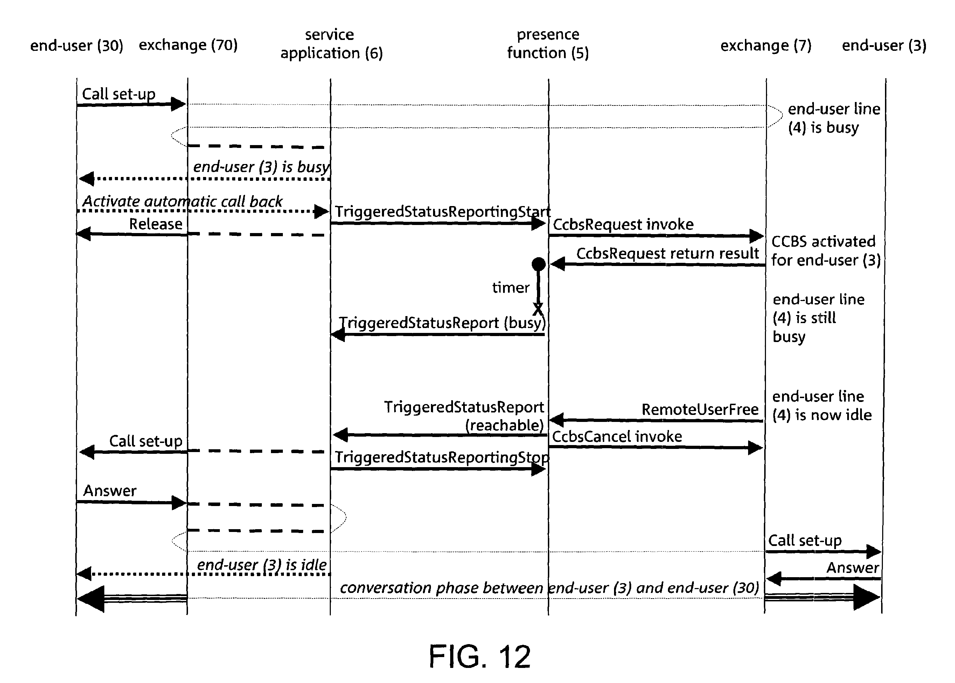

FIG. **10** provides the high-level architecture, whereby there is a more comprehensive network environment and whereby the service application (6) comprises for instance Instant Messaging and another function such as the automatic call back service (the latter is illustrated in more detail in FIG. **12).** In this embodiment, the real-time status is considered across multiple network domains with the purpose to offer increased accessibility of an end-user (3). Via the interface (9') and the interface (9") the service application (6) may retrieve the real-time status of an end-user line (4) if the corresponding end-user (3) is making use of the services in a mobile network domain (10) or another network domain (100), respectively. The service application (6) may interact with these network domains (10, 100) via the interfaces (9', 9") using for example but not limited to the UserStatus API as part of the OSA Mobility SCF.

In this respect known solutions are available to retrieve the real-time status of an end-user line (4) in a mobile network (10) and may be accomplished in another network domain (100) with similar characteristics whereas such a real-time status capability is not available in telecom networks (1).

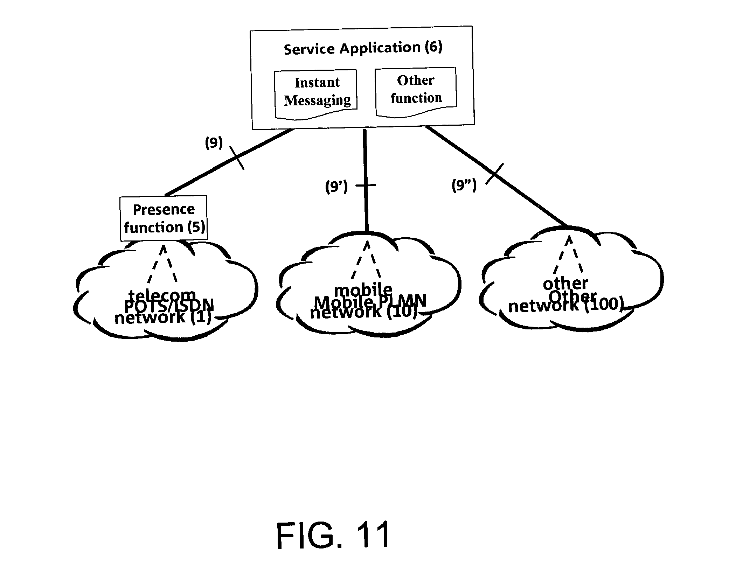

FIG. **11** depicts an embodiment of the present invention whereby real-time status information can be provided to the service application (6) via the presence function (5) when the end-user (3) is making use of the POTS and/or ISDN services provided by a telecom network (1). The service application (6) will interact via the interfaces (9, 9', 9") to retrieve information about the real-time status of an end-user line (4) when making use of services in multiple network domains (1, 10, 100).

In FIG. **12** an embodiment of the present invention is depicted in the context of FIG. **7** and FIG. **11** whereby an end-user (30) in the mobile network (10) is offered an automatic call back service when during call set-up the end-user line (4) in the telecom network (1) is determined to be busy. This automatic call back service may be offered by the service application (6) in conjunction with or as part of an Instant Messaging service application. Such an automatic call back service will be most attractive if this service capability spans multiple network domains (1, 10, 100). I.e. when next to the real-time status of the end-user line (4) in the telecom network (1) also the real-time status of an end-user line may be retrieved in a mobile network (10) and in another network domain (100).

In FIG. **12** the diagram describes the situation where a call set-up is made by an end-user (30) in the mobile network (10) towards an end-user (3) in the telecom network (1), which end-user (3) uses its end-user device (2) so that the real-time status of the end-user line (4) is busy. Because of the busy condition of the end-user line (4), the exchange (70) in the mobile network (10) will forward the call set-up to the service application (6). This forwarding of the call set-up can be achieved by known procedures in networks or alternatively, not shown in FIG. **12**, may be achieved by a forwarding on busy setting of the end-user line (4) at the exchange (7) in the telecom network (1). These forwarding aspects are outside the scope of this invention. Successively, the service application (6) will offer the end-user (30) in the mobile network (10) the possibility to activate the automatic call back service. If so, the service application (6) will request, in accordance with this invention, with a TriggeredStatusReportingStart the presence function (5) to start monitoring the real-time status of the end-user line (4) in the telecom network (1). In turn, the presence function (5) will sent a CcbsRequest invoke component to the exchange (7) in the telecom network (1). On receipt of the CcbsRequest return result the presence function (5) will start a timer to await the RemoteUserFree invoke component. Because of the continuing busy status of the end-user line (4), the timer that is comprised by the process of the presence function (5) will expiry and consequently the presence function (5) will send a TriggeredStatusReport (busy) to the service application (6). When the real-time status of the end user line (4) becomes idle, the exchange (7) will generate a RemoteUserFree invoke component to the presence function (5). As a result the presence function (5) will send a TriggeredStatusReport to the service application (6) and also a CcbsCancel invoke component to the exchange (7). Then the service application (6) will initiate via the exchange (70) in the mobile network (10) a new call set-up to the end-user (30). This call initiation may also be achieved in an alternative manner not shown in FIG. **12**. In addition, the service application (6) will send a TriggeredStatusReportingStop to the presence function (5). If the end-user (30) in the mobile network (10) answers, also a call set-up will be initiated to the end-user (3) in the telecom network (1). Finally the call will be established between both end-users (3, 30) when the end-user (3) in the telecom network (1) answers the call.

Without the use of the presence function (5) the service application (6) would not be able to offer this automatic call back service without hinder to the called end-user (for the example in FIG. **12** the end-user (3) in the telecom network (1)) when for instance the service application (6) would have used a polling mechanism to detect the idle status of the called the end-user. In addition, if the service application (6) would use such a polling mechanism to have first the called end-user answering the phone before a call set-up is sent to the calling end-user (for the example in FIG. **12** the end-user (30) in the mobile network (10)), this would create an undesirable reverse call flow. In that situation the original called end-user would become the originator of the call initiated by the service application (6), and even worse, the original calling end-user may not answer the call (away from home, on the phone, etc.).

### EXPLANATORY LIST

CCBS components in SS7 messages

The following messages are relevant for the interaction between the exchange (7) and the presence function (5).

### a). CcbsRequest invoke component

According the CCBS standard this component is sent in a SS7 message between two exchanges in a telecom network when a calling end-user has activated the CCBS supplementary service when a call attempt failed due to the busy status of the called end-user. The exchange serving the calling end-user requests the exchange serving the called end-user to start a CCBS monitoring action for the busy end-user. With this CCBS monitoring action the exchange of the called end-user will report the exchange of the calling end-user if the status of the called end-user has become idle again. This CcbsRequest invoke component includes parameters like the telephone numbers of both end-users and some call specific information. In addition, the exchange serving the calling end-user will retain all call related information of the original call in order to make an automatic call set-up to the called end-user if the status of the called end-user has become idle and the calling end-user answers the phone.

### b). CcbsRequest return result component

This component is sent by the exchange serving the called end-user to the exchange serving the calling end-user to acknowledge the successful invocation of the CCBS monitoring action as a response to a received CcbsRequest invoke component.

### c). CcbsRequest return error component

This component is sent by the exchange serving the called end-user to the exchange serving the calling end-user to report an unsuccessful invocation of a CCBS monitoring action as a response to a received CcbsRequest invoke component.

### d). RemoteUserFree invoke component

This component is sent by the exchange serving the called end-user to the exchange serving the calling end-user to report the idle status of the called end-user as result of an outstanding CCBS monitoring action.

### e). CcbsCancel invoke component

This component may be sent by either the exchange serving the called end-user or the exchange serving the calling to cancel an outstanding CCBS monitoring action for the called end-user or the CCBS call information kept at the exchange serving the calling end-user, respectively.

### UserStatus API messages as part of OSA Mobility SCF

The following UserStatus API messages are relevant for the interaction between the service application (6) and the presence function (5).

### f). StatusReportRequest

This message is specified as part of the interactive status reporting mechanism by which a service application can request a network for the status of the end-user.

### g). StatusReportResult

This message is sent by a network to report the status of the end-user in response to a StatusReportRequest message from the service application.

### h). TriggeredStatusReportRequestStart

This message is specified as part of the triggered status reporting mechanism by which a service application can request a network for reporting the status changes of an end-user.

### i). TriggeredStatusReportRequestStop

This message is specified as part of the triggered status reporting mechanism by which a service application cancels an earlier request to a network for reporting the status changes of an end-user.

### j). TriggeredStatusReport

This message is sent by the network to report the status or status change of the end-user in response to a TriggeredStatusReportRequestStart message from the service application.

### CITED DOCUMENTS

[1] ITU-T
   Recommendation Q.9: General Recommendations on Telephone Switching and Signalling; International automatic and semi-automatic working; Vocabulary of switching and signalling terms
[2] ITU-T
   Recommendation Q.733.3: Switching and Signalling; Specifications of Signalling System No.7; ISDN supplementary services; Stage 3 description for call completion supplementary services using Signalling System No.7; Completion of calls to busy subscriber (CCBS)
[3] ETSI
   EN 300 356-18: Integrated Services Digital Network (ISDN); Signalling System No.7 (SS7); ISDN User Part (ISUP) version 4 for the international interface; Part 18: Completion of Calls to Busy Subscriber (CCBS) supplementary service
[4] ETSI
   ES 202 915-6: Open Service Access (OSA); Application Programming Interface (API); Part 6: Mobility SCF

## Claims

1. A method for determining if the real-time status of an end-user line (4) is busy or idle, the end-user line (4) connecting an end-user device (2) and an exchange (7) that is comprised by a telecom network (1) that provides services to an end-user (3) and that comprises Signalling System No.7 (SS7) functionality, whereby a presence function (5) is used and whereby the presence function (5) comprises a process that makes use of the Completion of Calls to Busy Subscriber (CCBS) supplementary service that is comprised by the SS7 functionality.

2. Method according to claim 1, whereby the presence function (5) acts like an originating local exchange according to the procedures of the CCBS supplementary service and whereby the exchange (7) acts like a terminating local exchange according to the procedures of the CCBS supplementary service.

3. Method according to claim 1 or 2, whereby the process comprised by the presence function (5) interacts with the real-time status monitoring capability comprised by the exchange (7), which status monitoring capability is part of the CCBS supplementary service.

4. Method according to claim 1, 2 or 3, whereby the presence function (5) is interconnected to the telecom network (1) via a first interface (8).

5. Method according to any of the preceding claims, whereby the presence function (5) is interconnected via a second interface (9) to a service application (6), which service application (6) is able to request and receive the real-time status of an end-user line (4) from the presence function (5) via the second interface (9).

6. Method according to claim 5, whereby the presence function (5) comprises functionality for managing the interaction between the first interface (8) and the second interface (9).

7. Method according to any of the preceding claims, whereby the presence function (5) comprises a database.

8. Method according to any of the preceding claims, whereby the presence function (5) comprises a SS7 communication stack.
